# EUROPEAN PATENT APPLICATION

(11) **EP 1 777 951 A2**
(43) Date of publication of application: **25.04.2007**
(21) Application number: 06122614.8
(22) Date of filing: 19.10.2006
(51) Int. Cl.: H04N 5/445

(54) **Video processing apparatus and video processing method**

(30) Priority: 20.10.2005 KR 20050099314
(71) Applicant: Samsung Electronics Co., Ltd., Suwon-si, Gyeonggi-Do (KR)
(72) Inventor: Je, Kal-heon, Suwon-si, Gyeonggi-do (KR)
(74) Representative: Perkins, Dawn Elizabeth

(57) **Abstract**

A video processing apparatus, the apparatus includes: a signal receiving unit which receives video signals of a plurality of channel groups, wherein each channel group comprises a plurality of channels; a video processing unit which processes the received video signals; a display which displays videos corresponding to the processed video signals; and a controller which controls the video processing unit to align and display the videos on a per-channel group basis in a predetermined order and adjust and display the videos on a per-channel or channel group basis.

## Description

Apparatuses and methods consistent with the present invention relate to video processing, and more particularly, to video processing which enhances a user's convenience for selecting a channel.

A video processing apparatus such as a TV receives video signals of terrestrial TV broadcasting, cable TV broadcasting and so on, performs a video processing for the received video signals, and displays a video based on the processed video signal. When the video processing apparatus receives and processes the video signals, it is very difficult to select a channel desired by a user with ease under recent broadcasting environments where there exist more than several hundred channels, such as digital TV broadcasting, cable TV broadcasting and so on.

According to a related art video processing apparatus, a video of one channel is shown on a screen, allowing a user to directly input a number or the like of a channel to be selected by him or change a channel using left and right keys or the like of a remote controller. However, since only the video of one channel is shown on the screen and also it is difficult for the user to memorize contents of more than several hundred channels individually, the user may decide whether to select a channel only after a video of a selected channel is necessarily shown on the screen.

In the mean time, if channels may be classified according to any criterion, for example, whether a channel is an air broadcasting channel or a cable broadcasting channel (hereinafter, a set of channels classified according to the criterion is referred to as "channel group"), the user has a need to select a desired channel group prior to selection of a desired channel. For example, when he desires to select a cable broadcasting channel while watching a program of an air broadcasting channel, there is troublesomeness in that he first selects a cable broadcasting channel group and then has to select the desired cable broadcasting channel while seeing a picture of the selected cable broadcasting channel group.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a video processing apparatus and a video processing method, which are capable of enhancing user's convenience for selection of a channel.

The foregoing and/or other aspects of the present invention are achieved by providing a video processing apparatus, the apparatus comprising: a signal receiving unit which receives video signals of a plurality of channel groups, wherein each channel group comprises a plurality of channels; a video processing unit which processes the received video signals; a display which displays videos corresponding to the processed video signals; and a controller which controls the video processing unit to align and display the videos on a per-channel group basis in a predetermined order and adjust and display the videos on a per-channel or channel group basis.

According to an exemplary embodiment of the present invention, the signal receiving unit comprises a plurality of tuners corresponding to the displayed videos of the plurality of channels, and wherein the controller controls the plurality of tuners to receive the video signals corresponding to the displayed videos of the plurality of channels.

According to an exemplary embodiment of the present invention, the controller controls the signal receiving unit to receive the plurality of video signals corresponding to the displayed videos of the plurality of channels in a sequential manner.

According to an exemplary embodiment of the present invention, the controller controls the video processing unit such that some of the displayed videos of the plurality of channels comprise moving images and others of the displayed videos comprise still images.

According to an exemplary embodiment of the present invention, the video processing apparatus further comprises a user input unit which receives a user's input, wherein the controller adjust and display the videos based on the user's input.

According to an exemplary embodiment of the present invention, the user input unit has two pairs of buttons corresponding to movement of the channels and the channel groups, respectively, in a forward or backward order.

According to an exemplary embodiment of the present invention, each of the videos is displayed in each of a plurality of areas into which a screen of the display is divided, and the videos belonging to the same channel group displayed in the areas are arranged in a horizontal or vertical direction.

According to an exemplary embodiment of the present invention, the channel group includes a set of channels received by way of different transmission media, a set of channels having channel numbers and a set of channels classified by genre.

The foregoing and/or other aspects of the present invention are achieved by providing a video processing method, the method comprising: receiving video signals of a plurality of channel groups, wherein each group comprises a plurality of channels; processing the received video signals comprising aligning and displaying videos of the plurality of channels on a per-channel group basis in a predetermined order; and adjusting and displaying the videos on a per-channel or channel group basis.

According to an exemplary embodiment of the present invention, the receiving the video signals comprises receiving a plurality of video signals corresponding to the displayed videos of the plurality of channels simultaneously.

According to an exemplary embodiment of the present invention, the receiving the video signals comprises receiving a plurality of video signals corresponding to the displayed videos of the plurality of channels in a sequential manner.

According to an exemplary embodiment of the present invention, the processing the received video signals comprises processing the received video signals such that some of the displayed videos of the plurality of channels comprise moving images and others of the displayed videos comprise still images.

According to an exemplary embodiment of the present invention, the video processing method further comprises receiving a request for channel change from a user; wherein the adjusting and displaying is performed according to the channel change request from the user.

According to an exemplary embodiment of the present invention, each of the videos is displayed in each of a plurality of areas into which a screen of the display is divided, and the videos belonging to the same channel group displayed in the areas are arranged in a horizontal or vertical direction.

According to an exemplary embodiment of the present invention, the channel group includes a set of channels received by way of different transmission media, a set of channels having channel numbers and a set of channels classified by genre.

The above and/or other aspects of the present invention will become apparent and more readily appreciated from the following description of exemplary embodiments, taken in conjunction with the accompanying drawings of which:
Figure 1 is a view illustrating a video processing apparatus according to an exemplary embodiment of the present invention;
Figure 2 is a schematic block diagram illustrating internal configuration of the video processing apparatus according to an exemplary embodiment of the present invention;
Figure 3 is a view illustrating one example of a picture displayed by the video processing apparatus, according to an exemplary embodiment of the present invention;
Figure 4 is a view used to explain channel change by the video processing apparatus according to an exemplary embodiment of the present invention;
Figures 5A and 5B are views illustrating examples of a picture displayed by the video processing apparatus, according to another exemplary embodiment of the present invention; and
Figure 6 is a flow chart schematically illustrating operation of the video processing apparatus according to an exemplary embodiment of the present invention.

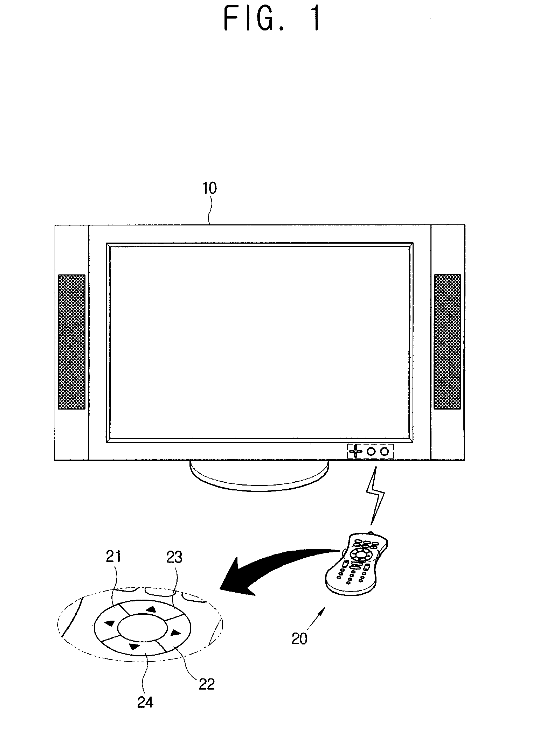

Reference will now be made in detail to exemplary embodiments of the present invention, examples of which are illustrated in the accompanying drawings. Figure 1 is a view illustrating a video processing apparatus 10 according to an exemplary embodiment of the present invention.

The video processing apparatus 10 receives video signals containing video information from broadcasting stations, processes the received video signals, and displays a video based on the video information of the processed video signal. The video processing apparatus 10 in this exemplary embodiment may be a digital TV for receiving, processing and displaying video signals of various channels. In this case, the video signals received and processed by the video processing apparatus 10 are video signals of a plurality of channel groups, each of which has a plurality of channels. The channel groups may include sets of channels received by way of different transmission media such as air and cables. Alternatively, the channel groups may include a set of channels having channel numbers of "11", "12", ..., "19", a set of channels having channel numbers of "101", "102", ..., "109", etc. More alternatively, the channel groups may be sets of channels classified by genre such as news, movie, cartoon and so on.

The video processing apparatus 10 allows a user to select a channel when the apparatus 10 changes and displays videos on a per-channel basis or on a per-channel group basis according to a channel change input from the user. The video processing apparatus 10 divides a screen into a plurality of areas, in each of which a video of one channel is displayed. In this case, the video processing apparatus 10 arranges and displays videos of respective channels for each channel group. Upon receiving the channel change input from the user, the video processing apparatus 10 changes and displays channels on a per-channel basis or on a per-channel group basis.

The video processing apparatus 10 may include a user input unit 20 that receives information required for channel selection from the user, as shown in Figure 1. In this exemplary embodiment, the user input unit 20 may be implemented by a remote controller including buttons 20, 21 and 23 which is explained hereinafter. In another exemplary embodiment, the user input unit 20 may be implemented by an input panel (not shown) with a plurality of input buttons, which is provided in a body of the video processing apparatus 10 and receives information required for channel selection from the user.

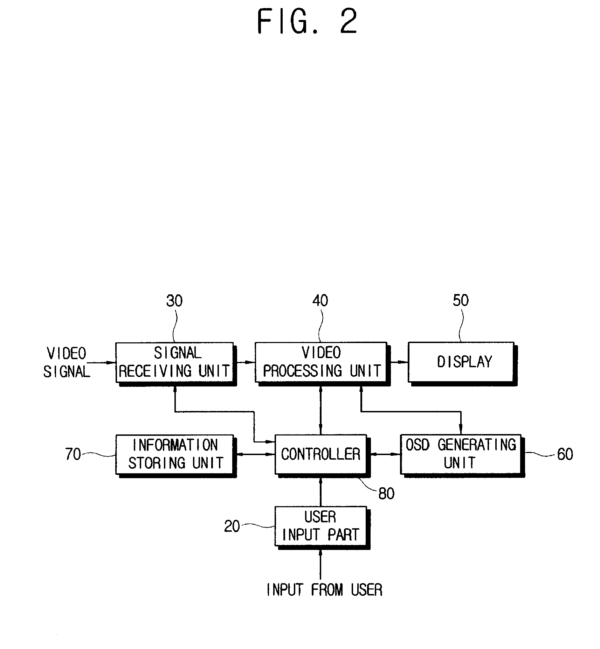

Figure 2 is a schematic block diagram illustrating internal configuration of the video processing apparatus 10 according to this exemplary embodiment. As shown in Figure 2, the video processing apparatus 10 of this exemplary embodiment includes a signal receiving unit 30, a video processing unit 40, a display 50, an OSD (On Screen Display) generating unit 60, an information storing unit 70 and a controller 80, in addition to the user input unit 20.

The signal receiving unit 30 receives a video signal of a channel that a user desires to select. Specifically, the signal receiving unit 30 receives a video signal tuned at a frequency corresponding to the channel selected by the user under control of the controller 80.

The video processing unit 40 processes the video signal received in the signal receiving unit 30 and transmits the video signal to the display 50. Specifically, the video processing unit 40 performs a series of operations such as a decoding operation for extracting a video signal of a format adapted for displaying from the received video signal, an image enhancement operation for enhancing image quality of the extracted video signal, a scaling operation for adjusting resolution of a video in order to display the video of a proper size, etc., and may additionally perform a de-interlacing operation for an interlaced video signal.

The display 50 receives the processed video signal from the video processing unit 40 and displays a video on a screen based on the received video signal. The display 50 may be implemented by a CRT (Cathode Ray Tube), LCD (Liquid Crystal Display), PDP (Plasma Display Panel), etc.

The OSD generating unit 60 generates OSD information such as channel numbers of channels to be displayed on the display 50 and so on, under control of the controller 80.

Information on channels, such as a so-called channel map, including channel numbers, frequencies and so on, is stored in the information storing unit 70. In addition, information on a plurality of channel groups and a plurality of channels corresponding to each channel group is stored in the information storing unit 70.

The controller 80 controls the overall operation of the video processing apparatus 10. Specifically, the controller 80 controls operation of the signal receiving unit 30, the video processing unit 40, the OSD generating unit 60, etc., according to user's instructions input from the user input unit 20. Upon receiving information required for channel selection from the user input unit 20, the controller 80 instructs the signal receiving unit 30 to tune a selected channel with reference to the information storing unit 70 and controls the video processing unit 40 to process the received video signal.

The controller 80 in this exemplary embodiment controls the signal receiving unit 30 and the video processing unit 40 such that the videos of the plurality of channels are arranged and displayed on a per-channel group basis. Upon determining that a predetermined button previously described is pushed through the user input unit 20 while displaying a video corresponding to one channel selected by the user on the display 50, the controller 80 can initialize an operation of arranging and displaying the videos of the plurality of channels on a per-channel group basis.

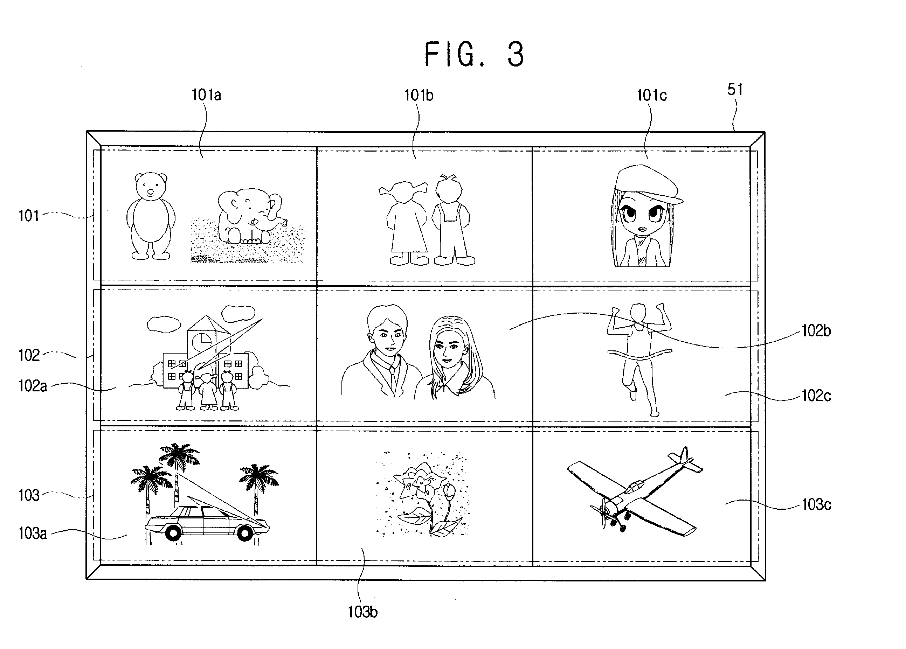

Figure 3 is a view illustrating one example of a screen 51 displayed by the video processing apparatus 10, according to this exemplary embodiment. The controller 80 divides the screen 51 displayed on the display 50 into three areas in respective horizontal and vertical directions and arranges and displays channels and channel groups in a predetermined order. The controller 80 arranges and displays channels belonging to the same channel group in areas corresponding to the horizontal direction (hereinafter referred to as a first area 101, a second area 102 and a third area 103 from the top to the bottom). Here, an order in which the channel groups are arranged may be set to be an order specified by the user, and an order in which channels are arranged in each channel group may be based on channel numbers.

The controller 80 may display a channel group to which a channel selected by the user belongs in the second area 102 and may display the other, i.e., each of the first area 101 and the third area 103, channel groups corresponding to orders which are previous and next, respectively, to the channel group displayed in the second area 102. In this case, the channel selected by the user may be a channel selected by the user immediately before it is arranged on a per-channel group basis.

In addition, the controller 80 may display a channel selected by the user in a second-2 area 102b of the second area 102 and may display channels corresponding to orders previous and next to the channel selected by the user in a second-1 area 102a and a second-3 area 102c of the second area 102, respectively.

In this exemplary embodiment, the controller 80 may display a channel equal to or closest to a channel number of the channel selected by the user, among the channels belonging to the channel group displayed in the first area 101, in a first-2 area 101b of the first area 101. The controller 80 may display channels, which correspond to orders previous and next to the channel displayed in the first-2 area 101b, in a first-1 area 101 a and a first-3 area 101c of the first area 101, respectively. The controller 80 may display channels in third-1 to 3 areas 103a to 103c of the third area 103 in a way similar to the first area 101.

The controller 80 controls the signal receiving unit 30 to receive video signals corresponding to channels displayed in respective areas 101 to 103 with reference to frequency information stored in the information storing unit 70. The signal receiving unit 30 may include a plurality of tuners corresponding to videos displayed in the respective areas 101 to 103. In this case, the controller 80 controls corresponding tuners to receive video signals corresponding to the respective areas 101 to 103, and the respective tuners may receive corresponding video signals simultaneously and transmit the received video signals to the video processing unit 40.

As an alternative exemplary embodiment, the signal receiving unit 30 may include tuners of numbers corresponding to some of the plurality of areas 101 to 103, and the controller 80 may control the tuners to receive some of a plurality of video signals corresponding to the plurality of areas 101 to 103 sequentially. In this case, the controller 80 may control the video processing unit 40 such that some of the videos of the plurality of channels displayed in the plurality of areas 101 to 103 are output as moving pictures and the others are output as still pictures.

For example, if the signal receiving unit 30 includes one tuner, the controller 80 may control the tuner to receive the plurality of video signals corresponding to the plurality of areas 101 to 103 sequentially, and, based on the received video signals, may control the video processing unit 40 in such a manner that a moving picture is displayed in the second-2 area 102b corresponding to a channel selected by the user and still pictures are displayed in the remaining areas. After this, the controller 80 controls the signal receiving unit 30 and the video processing unit 40 to receive and display only the channel corresponding to the second-2 area 102b in real time until other instructions are input from the user.

In the meantime, upon receiving a channel change input from the user, the controller 80 changes and displays a channel on a per-channel or channel group basis.

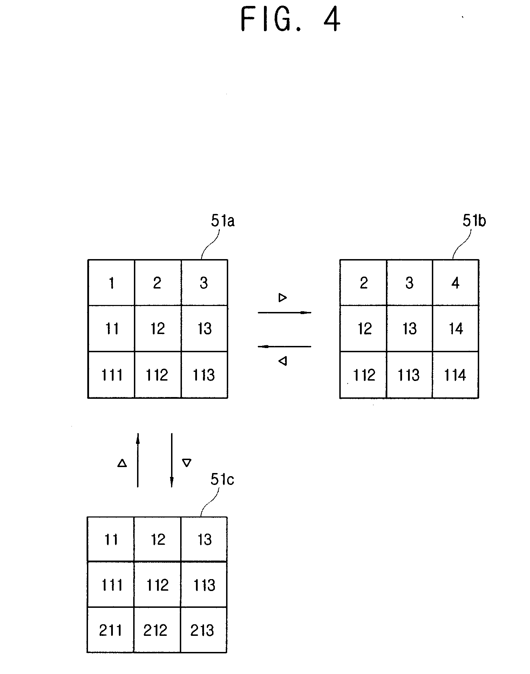

Figure 4 is a view used to explain channel change by the video processing apparatus 10, according to an exemplary embodiment of the present invention. In Figure 4, segmented areas in first to third screens 51a to 51c correspond to the first to third areas 101 to 103 shown in Figure 3. In addition, numbers indicated in the segmented areas in the first to third screens 51a to 51c represent channel numbers of corresponding channels. In each area of the first to third screens 51a to 51c is displayed a video of a corresponding channel (not shown).

When the user inputs an instruction, the controller 80 displays videos of channels on a per-channel group basis, as shown in the first to third screens 51a to 51c. For example, channel groups are displayed in an order of an air broadcasting channel group, a cable broadcasting channel group, etc., from the top to the bottom. For example, the air broadcasting channel group has channel numbers of "1", "2", "3", ..., the cable broadcasting channel group has channel numbers of "11", "12", "13", ..., and the other channel group has channel numbers of "111", "112", "113", ..., and "211", "212", "213", ....

In this exemplary embodiment, the user input unit 20, which includes a pair of left and right buttons 21 and 22, as shown in Figure 1, sends the controller 80 information representing a forward channel change (for example, increase of a channel number) on a per-channel basis when the left button 21 is pushed, and information representing a backward channel change (for example, decrease of a channel number) on the per-channel basis when the right button 22 is pushed. In addition, the user input unit 20, which further includes a pair of top and bottom buttons 23 and 24, as shown in Figure 1, sends the controller 80 information representing a forward channel group change on a per-channel group basis when the top button 23 is pushed, and information representing a backward channel group change on the per-channel group basis when the bottom button 24 is pushed.

Under a state displayed as in the first screen 51a, upon determining that the right button 22 is pushed through the user input unit 20, the controller 80 controls the signal receiving unit 30 and the video processing unit 40 to change and display channels of respective areas in a forward order one by one, that is, to receive, process and display video signals of channels, with the channel numbers of the channels of the respective areas increased one by one, for displaying corresponding videos, as shown in the second screen 51b.

Likewise, under a state displayed as in the second screen 51b, upon determining that the left button 21 is pushed through the user input unit 20, the controller 80 controls the signal receiving unit 30 and the video processing unit 40 to change and display channels of respective areas in a backward order one by one, that is, to receive, process and display video signals of channels, with the channel numbers of the channels of the respective areas decreased one by one, for displaying corresponding videos, as shown in the first screen 51a.

In the mean time, under a state displayed as in the first screen 51a, upon determining that the bottom button 24 is pushed through the user input unit 20, the controller 80 controls the signal receiving unit 30 and the video processing unit 40 to change and display channel groups to which channels of respective areas belong, in a forward order one by one, that is, to receive, process and display video signals of channels belonging to a next channel group, based on an order of channel groups of channels of the respective regions, as shown in the third screen 51c.

Likewise, under a state displayed as in the third screen 51c, upon determining that the top button 23 is pushed through the user input unit 20, the controller 80 controls the signal receiving unit 30 and the video processing unit 40 to change and display channel groups to which channels of respective areas belong, in a backward order one by one, that is, to receive, process and display video signals of channels belonging to a previous channel group, based on an order of channel groups of channels of the respective regions.

As an alternative exemplary embodiment, the controller 80 may change and display channels corresponding to some of the areas of the screen 51 for the channel change of the user. For example, under a state displayed as in the first screen 51a, upon determining that the right button 22 is pushed through the user input unit 20, the controller 80 controls the signal receiving unit 30 and the video processing unit 40 to change only channels corresponding to areas in a middle line (channels "11", "12", and "13" in Figure 4), with channels corresponding to areas in upper and lower lines remaining unchanged, in a forward order one by one, and to display the channels as shown in a middle line of the second screen 51b (channels "12", "13" and "14"). In this case, it is preferable but not necessary that the controller 80 is input with a selection from the user on whether channels corresponding to all areas are changed or only channels corresponding to some areas are changed.

In this exemplary embodiment, the controller 80 may be implemented by a computer program executed by a microprocessor such as a CPU. Herein, the computer program may be stored in a flash memory or the like.

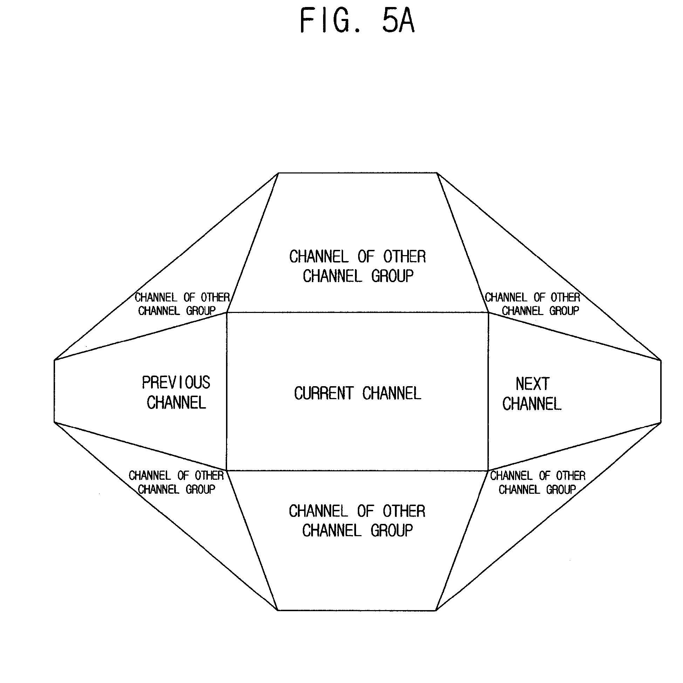

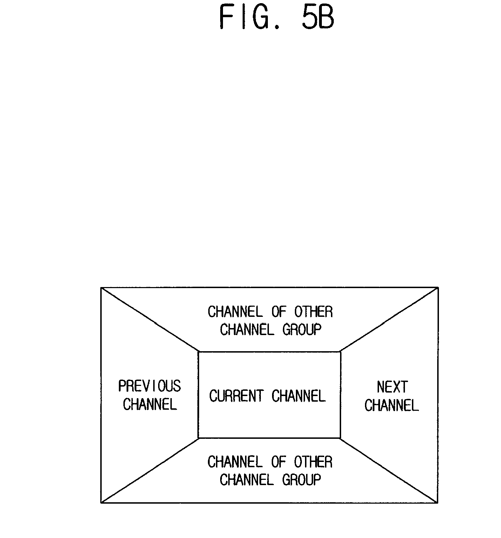

Figures 5A and 5B are views illustrating examples of a screen displayed by the video processing apparatus 10, according to another exemplary embodiment of the present invention. As shown in Figures 5A and 5B, the number of areas segmented in the screen displayed by the video processing apparatus 10 and shape of the areas may be implemented in various ways.

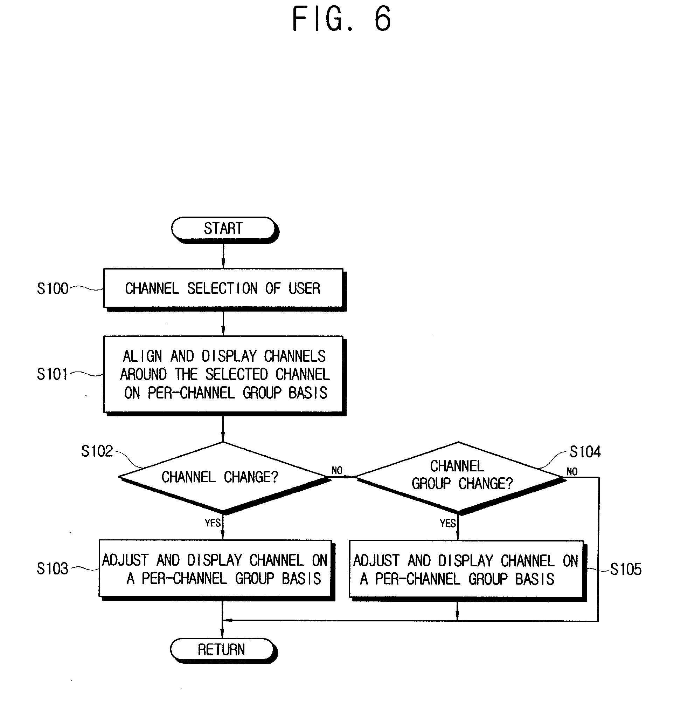

Figure 6 is a flow chart schematically illustrating operation of the video processing apparatus 10 according to an exemplary embodiment of the present invention. A user inputs a channel number of a desired channel to the video processing apparatus 10 at operation S100. If the user instructs the video processing apparatus 10 to display the channel on a per-channel group basis, the video processing apparatus 10 divides a screen into a plurality of areas and aligns and displays channels corresponding to respective areas around the desired channel on a per-channel group basis at operation S101.

When the video processing apparatus 10 is input with a request for channel change on a per-channel basis from the user at operation S102, it changes channels displayed in respective areas in a forward or backward order, and receives, processes and displays a corresponding video signal at operation S103.

If the video processing apparatus 10 is not input with a request for channel change on a per-channel basis from the user, it determines whether or not a request for channel change on a per-channel group basis is input. If it is determined that a request for channel change on a per-channel group basis is input at operation S104, the video processing apparatus 10 changes channel groups to which channels displayed in the respective areas belong, in a forward or backward order, and receives, processes and displays a corresponding video signal at operation S105. If it is determined that a request for channel change on a per-channel group basis is not input from the user, the video processing apparatus 10 returns to the desired channel.

As apparent from the description, the present invention provides a video processing apparatus and a video processing method, which are capable of enhancing user's convenience for selection of a channel.

Although a few exemplary embodiments of the present invention have been shown and described, it will be appreciated by those skilled in the art that changes may be made in these exemplary embodiments without departing from the scope of the invention as defined in the appended claims.

## Claims

1. A video processing apparatus (10), comprising:
a signal receiving unit (30) configured to receive video signals of a plurality of channel groups, wherein each channel group comprises a plurality of channels;
a video processing unit (40) configured to process the received video signals;
a display (50) configured to display videos corresponding to the processed video signals; and
a controller (80) configured to control the video processing unit (40) to align and display the videos on a per-channel group basis in a predetermined order and adjust and display the videos on a per-channel or channel group basis.

2. The video processing apparatus according to claim 1, wherein the signal receiving unit (30) comprises a plurality of tuners corresponding to the displayed videos of the plurality of channels, and
wherein the controller (80) controls the plurality of tuners to receive the video signals corresponding to the displayed videos of the plurality of channels.

3. The video processing apparatus according to claim 1, wherein the controller (80) controls the signal receiving unit (30) to receive the plurality of video signals corresponding to the displayed videos of the plurality of channels in a sequential manner.

4. The video processing apparatus according to claim 3, wherein the controller (80) controls the video processing unit (40) such that some of the displayed videos of the plurality of channels comprise moving images and others of the displayed videos comprise still images.

5. The video processing apparatus according to any one of the preceding claims, further comprising a user input unit (20) which receives a user's input,
wherein the controller (80) adjusts and displays the videos based on the user's input.

6. The video processing apparatus according to claim 5, wherein the user input unit (20) has two pairs of buttons (21, 22, 23, 24) corresponding to movement of the channels and the channel groups, respectively, in a forward or backward order.

7. The video processing apparatus according to any one of the preceding claims, wherein each of the videos is displayed in each of a plurality of areas into which a screen of the display (50) is divided, and the videos belonging to the same channel group displayed in the areas are arranged in a horizontal or vertical direction.

8. The video processing apparatus according to any one of the preceding claims, wherein the channel group includes a set of channels received by way of different transmission media, a set of channels having channel numbers and a set of channels classified by genre.

9. A video processing method, the method comprising:
receiving video signals of a plurality of channel groups, wherein each group comprises a plurality of channels;
processing the received video signals comprising aligning and displaying videos of the plurality of channels on a per-channel group basis in a predetermined order; and
adjusting and displaying the videos on a per-channel or channel group basis.

10. The video processing method according to claim 9, wherein the receiving the video signals comprises receiving a plurality of video signals corresponding to the displayed videos of the plurality of channels simultaneously.

11. The video processing method according to claim 9, wherein the receiving the video signals comprises receiving a plurality of video signals corresponding to the displayed videos of the plurality of channels in a sequential manner.

12. The video processing method according to claim 11, wherein the processing the received video signals comprises processing the received video signals such that some of the displayed videos of the plurality of channels comprise moving images and others of the displayed videos comprise still images.

13. The video processing method according to any one of claims 9 to 12, further comprising receiving a request for channel change from a user;
wherein the adjusting and displaying is performed according to the channel change request from the user.

14. The video processing method according to any one of claims 9 to 13,
wherein each of the videos is displayed in each of a plurality of areas into which a screen of the display is divided, and the videos belonging to the same channel group displayed in the areas are arranged in a horizontal or vertical direction.

15. The video processing method according to any one of claims 9 to 14,
wherein the channel group includes a set of channels received by way of different transmission media, a set of channels having channel numbers and a set of channels classified by genre.

16. A video processing apparatus comprising:
a signal receiving unit (30) configured to receive video signals of a plurality of channel groups, wherein each channel group comprises a plurality of channels;
a video processing unit (40) configured to process the received video signals;
a display (500 configured to display simultaneously a plurality of images each derived from one of the processed video signals respectively; and
a controller (80) configured to control the video processing unit (40) to display the images arranged according to channel groups in a predetermined order, and to adjust the displayed images in response to a user input to change a selected channel to a previous or subsequent channel in the same group, or to a channel in a previous or subsequent group.

17. The video processing apparatus according to claim 16, wherein the images are all moving images.

18. The video processing apparatus according to claim 16, wherein only the image corresponding to the selected channel is a moving image, and the remaining images are still images.
